# FASCICULE DE BREVET EUROPEEN

(11) **EP 2 851 793 B1**
(45) Date de publication et mention de la délivrance du brevet: **19.12.2018**
(21) Numéro de dépôt: 14185390.3
(22) Date de dépôt: 18.09.2014
(51) Int. Cl.: G06F 9/445, G06F 9/44, G06F 11/07, H04L 12/26

(54) **PROCÉDÉ DE CONFIGURATION D'AU MOINS UN NOEUD D'UNE GRAPPE D'ORDINATEURS, DISPOSITIFS CORRESPONDANT ET SYSTÈME CORRESPONDANT**
VERFAHREN ZUR KONFIGURATION MINDESTENS EINES COMPUTERCLUSTERKNOTENS, ENTSPRECHENDE VORRICHTUNG UND ENTSPRECHENDES SYSTEM
METHOD FOR CONFIGURING AT LEAST ONE NODE OF A COMPUTER CLUSTER, CORRESPONDING EQUIPMENT AND CORRESPONDING SYSTEM

(30) Priorité: 20.09.2013 FR 1359050
(43) Date de publication de la demande: 25.03.2015
(73) Titulaire: BULL SAS, 78340 Les Clayes sous Bois (FR)
(72) Inventeur: Georges, Julien, 81860 Bruyeres Le Chatel (FR); Iceta, Thierry, 38000 Grenoble (FR); Flacard, Emmanuel, 38260 Ornacieux (FR)
(74) Mandataire: Camus, Olivier Jean-Claude

(56) Documents cités:
- EP-A1- 1 594 057
- JP-A- 2011 164 864

## Description

### DOMAINE TECHNIQUE DE L'INVENTION

L'invention se rapporte à un procédé de configuration d'au moins un noeud dans une grappe de serveurs

Serveur est un terme usité dans le domaine de l'invention. Un serveur est aussi un ordinateur en ce sens qu'il en a toutes les caractéristiques. On considère dans ce document que les termes ordinateur et serveur sont équivalents.

On entendra par grappe d'ordinateurs dans le cadre de la présente demande un regroupement de plusieurs ordinateurs aptes à coopérer pour la réalisation d'une tâche. Sont en particulier visées les grappes d'ordinateurs à haute performance aussi appelées cluster HPC, ferme de calcul, ou tout simplement grappe. Une grappe d'ordinateurs est classiquement un ensemble de quelques milliers d'ordinateurs, classiquement de mille à cinq mille. Cependant il existe des grappes d'ordinateurs plus petites et plus grosses. On connaît par exemple une grappe de dix ordinateurs. L'invention se rapporte à l'ensemble des grappes d'ordinateurs quelques soient leurs tailles.

Dans une grappe d'ordinateurs il y en a au moins un qui a le rôle de superviseur. Ce rôle est aussi désigné comme rôle de management. Les ordinateurs non superviseurs sont désignés comme les noeuds de la grappe. On entendra par déploiement le fait de fournir à chaque noeud au moins un système d'exploitation.

Dans le domaine de l'invention, le terme grappe est communément utilisé pour parler d'une grappe d'ordinateurs.

### ETAT DE LA TECHNIQUE ANTERIEURE

Dans l'état de la technique la configuration des noeuds d'une grappe d'ordinateurs se fait à partir d'une base de données de configurations, chaque noeud étant identifié par un identifiant dans la base de données de configurations.

Dans le cas d'un déploiement en mode amorçage multiple, c'est-à-dire dans le cas ou au moins un noeud de la grappe d'ordinateur peut démarrer sur plusieurs systèmes d'exploitation il faut s'assurer que les paramètres de configurations :
- Sont compatibles entre les différents systèmes, et entre les différente applications installées sur les différents systèmes, ou
- S'assurer que la base de données de configurations comporte les bons paramètres au moment du redémarrage du noeud. Les bons paramètres sont ceux qui sont compatibles avec le système d'exploitation actif sur le noeud.

Cela conduisait soit à des erreurs, soit à une préparation importante du redémarrage. Cela équivaut à une latence importante lors du redémarrage.

### EXPOSE DE L'INVENTION

L'invention vise à remédier à tout ou partie des inconvénients de l'état de la technique identifiés ci-dessus, et notamment à proposer des moyens pour permettre un redémarrage sur et rapide.

Pour se faire, au moment du démarrage, chaque noeud enregistre un identifiant de système actif dans une base de données, par exemple la base de données de la grappe, ce qui permet d'avoir en permanence la connaissance du système actif sur chaque noeud. Ainsi il est possible d'exploiter cette information pour la sélection automatique des paramètres de configuration à appliquer à un noeud.

Dans ce dessein, un aspect de l'invention se rapporte à un procédé de configuration d'au moins un noeud d'une grappe d'ordinateurs ledit au moins un noeud ayant été déployé en mode amorçage multiple caractérisé en ce qu'il comporte les étapes suivantes :
- Amorçage du noeud,
- Emission, par le noeud d'un message d'identification d'un système actif,
- Réception par un ordinateur de management de la grappe du message d'identification d'un système actif,
- Mise à jour par l'ordinateur de management dans une base de données de gestion de la grappe d'ordinateurs, d'un identifiant d'un système actif sur le noeud, à partir du contenu du message d'identification d'un système actif.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- Le procédé comporte également les étapes suivantes :
   - Sélection d'un noeud via un identifiant de noeud, par un processus de configuration de la grappe d'ordinateurs, dans la base de données de gestion de la grappe d'ordinateurs,
   - Extraction, par le processus de configuration, de paramètres de configuration préalablement enregistrés dans une base de données de gestion de configurations, les paramètres de configuration étant en relation avec le noeud et avec le système actif sur le noeud,
   - Emission, par le processus de configuration, de des paramètres de configuration extraits vers le noeud,
   - Application, par le noeud, des paramètres de configuration émis.
- le message d'identification comporte au moins :
   - Un code instruction (5011) de qualification du message,
   - Un identifiant (5012) de noeud,
   - Un identifiant (5013) de système actif.

L'invention se rapporte également à un dispositif de stockage numérique comportant un fichier correspondant à des codes instructions mettant en oeuvre le procédé selon une combinaison des caractéristiques précédentes.

L'invention se rapporte également à un dispositif mettant en oeuvre le procédé selon une combinaison des caractéristiques précédentes.

### BREVE DESCRIPTION DES FIGURES

D'autres caractéristiques et avantages de l'invention ressortiront à la lecture de la description qui suit, en référence aux figures annexées, qui illustrent :
- la figure 1, une illustration d'une infrastructure permettant la mise en oeuvre de l'invention ;
- la figure 2, une illustration d'étapes du procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

Pour la description du procédé on attribue des étapes ou des actions à des machines de type ordinateur. Une telle machine comporte au moins un microprocesseur et une mémoire de stockage. La mémoire de stockage permet d'enregistrer des codes instructions dont l'interprétation permet la mise en oeuvre des étapes ou des actions. Donc, lorsque l'on attribue une action à une machine, celle-ci est en fait réalisée par un microprocesseur de la machine interprétant des codes instructions enregistrés dans une mémoire de la machine.

Pour la description du procédé on attribue des communications à des machines de type ordinateur. Ces communications sont réalisées via de échanges de messages selon un protocole prédéterminé mis en oeuvre au moins par une carte réseau, câblée ou sans câble. Chaque machine impliquée dans la communication comporte sa carte réseau connecté, via un bus, à un microprocesseur de la machine. Cela permet au microprocesseur de prendre en compte les messages reçus et d'en émettre. Les cartes réseau sont par ailleurs connectées à un réseau, par exemple de type Ethernet. Il y a d'autres types de réseaux, comme les réseaux à fibre optique ou les réseaux sans fil. Ces derniers ne sont pas courants dans les grappes hautes performances mais l'enseignement de l'invention reste valable même dans ce contexte.

Lorsque l'on dit qu'une action est effectuée par un système d'exploitation, une application, un processus, ou une zone de code instructions, cette action correspond à la mise en oeuvre, par un microprocesseur, de codes instructions correspondant, comme décrit aux paragraphes précédents.

Par code instruction on entend aussi bien des codes binaires natifs, que des codes intermédiaires interprétés par une machine virtuelle, par exemple Java, ou des scripts interprétés par des moteurs d'interprétations, par exemple Python, PERL,... la liste n'est pas exhaustive. Cela inclut les instructions intégrées du système d'exploitation.

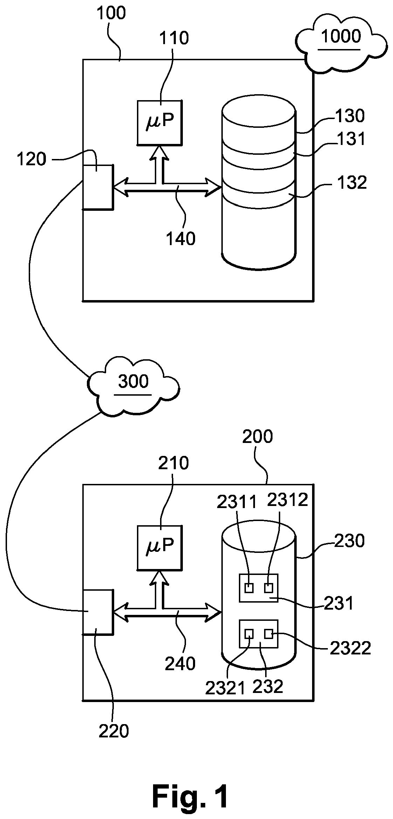

A la figure 1 montre une partie d'une grappe 1000 d'ordinateurs comportant un ordinateur 100 de management. L'ordinateur 100 de management comporte :
- Un microprocesseur 110,
- Une interface 120 réseau,
- Un moyen 130 de stockage, par exemple un disque dur.

L'homme du métier comprendra aisément qu'il s'agit d'une description pratique d'un moyen de stockage. Dans la pratique le moyen de stockage peut être composé de plusieurs composants physiques, disques durs selon plusieurs connectiques (IDE, SCSI, eSCSI, ATA, SATA, eSATA, USB,...) et plusieurs configurations (JBOD, RAID0, RAID1, RAID5,...), disque mémoire,... la liste n'est pas exhaustive. Ces remarques s'appliquent pour tous les ordinateurs décrits.

Les éléments de l'ordinateur 100 de management sont interconnectés par un bus 140. Les éléments de l'ordinateur 100 de management interconnectés par le bus 140 sont :
- Le microprocesseur 110,
- L'interface 120 réseau,
- Le moyen 130 de stockage.

Dans notre exemple les moyens 130 de stockage comportent une première zone 131 de stockage de codes instructions correspondant à une mise en oeuvre de l'invention.

Les moyens 130 de stockage comportent également :
- une deuxième zone 132 base de données de gestion de la grappe 1000,
- une troisième zone 133 base de données de gestion de configurations.

De manière simplifiée, la base de données de gestion de la grappe est au moins structurée en enregistrement de noeud, chaque enregistrement de noeud correspondant à un noeud de la grappe. Un enregistrement de noeud comporte au moins :
- Un champ identifiant de noeud permettant d'enregistrer un identifiant de noeud ;
- Un champ identifiant de système actif permettant d'identifié un système actif sur le noeud. Ce champ est propre à l'invention.

De manière simplifiée, la base de données de gestions de configurations est structurée en enregistrement de paramètre de configuration. Un enregistrement paramètre de configuration comporte au moins :
- Un champ identifiant de noeud,
- Un champ identifiant de paramètre,
- Un champ valeur de paramètre, et
- Un champ identifiant de système, ce dernier champ étant propre à l'invention.

La structuration des bases est obtenu soit par des fichiers à plat, soit par des moyens relationnels de type base de données relationnelles, soit encore par un enregistrement hiérarchique de type système de fichiers. Dans ce dernier cas un répertoire pourrait correspondre à un noeud, un sous répertoire à un système d'exploitation et ainsi de suite. L'objet de ce paragraphe est d'illustrer que la mise en oeuvre de l'invention n'est pas liée à une technologie de base de données particulière.

La figure 1 montre que la grappe 1000 comporte un noeud 200. Le noeud 200 comporte :
- Un microprocesseur 210,
- Une interface 220 réseau,
- Un moyen 230 de stockage, par exemple un disque dur.

Les éléments du premier noeud 200 sont interconnectés par un bus 240. Les éléments du noeud 200 interconnectés par le bus 240 sont :
- Le microprocesseur 210,
- L'interface 220 réseau,
- Le moyen 230 de stockage.

La figure 1 montre que le moyen 230 de stockage du noeud 200 comporte plusieurs zones :
- Une première zone 231 correspondant à un premier système d'exploitation,
- Une deuxième zone 232 correspondant à un deuxième système d'exploitation.

La première zone 231 des moyens de stockage 230 du noeud 200 comporte elle-même plusieurs zones :
- Une première zone 2311 comportant des codes instructions correspondant à la mise en oeuvre de l'invention,
- Une deuxième zone 2312 de paramétrage comportant des paires clé/valeur, chaque pair correspondant à un paramètre du noeud lorsqu'il exécute le système d'exploitation correspondant à la première zone 231 des moyens de stockage 230 du noeud.

La deuxième zone 232 des moyens de stockage 230 du noeud 200 comporte elle-même plusieurs zones :
- Une première zone 2321 comportant des codes instructions correspondant à la mise en oeuvre de l'invention,
- Une deuxième zone 2322 de paramétrage comportant des paires clé/valeur, chaque pair correspondant à un paramètre du noeud lorsqu'il exécute le système d'exploitation correspondant à la deuxième zone 232 des moyens de stockage 230 du noeud.

La figure 1 montre que la grappe 1000 comporte des moyens 300 d'interconnexion réseau permettant de d'interconnecter l'ordinateur 100 de management et le noeud. Cette interconnexion leur permet d'échanger des messages.

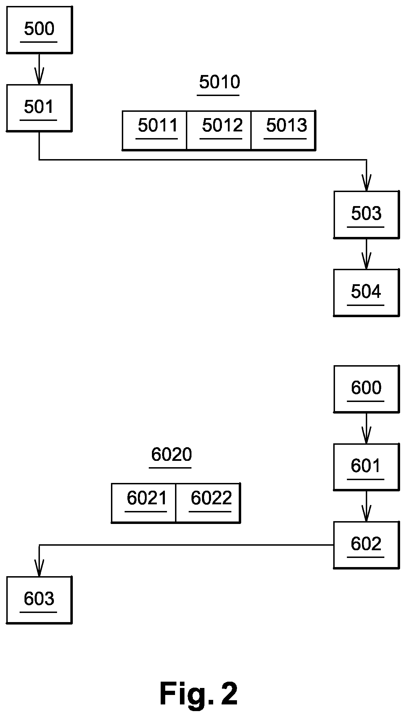

La figure 2 montre une étape 500 d'amorçage du noeud 200. Cette étape d'amorçage est initiée par une sollicitation reçue par le noeud 200. Il peut s'agir d'une sollicitation physique du noeud par l'activation d'un bouton de mise en marche, ou d'une sollicitation reçu via un réseau. La liste n'est pas exhaustive.

Au cours de l'étape d'amorçage le noeud effectue des opérations d'amorçage selon sa configuration, cette configuration comporte, entre autre, une désignation d'une partition sur laquelle le noeud doit démarrer. Cette désignation peut aussi être obtenue au cours d'une négociation avec un serveur DHCP non représenté. La partition de démarrage comporte le système d'exploitation qui sera actif sur le noeud.

Selon l'invention, postérieurement à l'acquisition de la désignation de la partition de démarrage, et après le début de la séquence d'amorçage, le noeud met en oeuvre une étape 501 d'émission d'un message 5010 d'identification du système actif.

Le message 5010 d'identification du système actif comporte au moins :
- Un code instruction (5011) de qualification du message comme un message d'identification de système actif.
- Un identifiant (5012) du noeud, par exemple un identifiant réseau (IP, MAC, ...)
- Un identifiant (5013) du système actif.

Un identifiant d'un système actif est, par exemple :
- Un identifiant prédéfini,
- Un nom d'un système d'exploitation,
- Un identifiant de partition,
- ... la liste n'est pas exhaustive.

Une fois le message constitué, le noeud l'émet destination de l'ordinateur de management. L'adresse de l'ordinateur de management est, par exemple :
- Connu a priori lors d'un déploiement des systèmes d'exploitation,
- Obtenue lors d'une négociation avec un serveur DHCP,
- ...

Dans une étape 503 de réception d'un message d'identification d'un système actif, l'ordinateur 100 de management reçoit le message 5010 d'identification du système actif. Ce message est traité au cours d'une étape 504 de mise à jour de la base de données de gestion de grappe.

Dans l'étape 504 l'ordinateur 100 de management extrait du message reçu à l'étape précédente :
- Le code instruction : cela permet de savoir quel traitement doit être appliqué au message, en d'autre terme qu'une propriété d'un enregistrement de la base de données de gestion de la grappe doit être mise à jour,
- L'identifiant de noeud : cela permet de savoir quel enregistrement de la base de données de gestion de grappe doit être mis à jour.
- L'identifiant de système actif : cela permet de connaître la valeur à utiliser pour mettre à jour la propriété de l'enregistrement.

A partir de l'étape 504 de mise à jour de la base de données de gestion de grappe, l'information relative au système actif sur le noeud est accessible à toutes les applications ayant les autorisations requise pour y accéder.

La figure 2 montre une étape 600 de sélection d'un noeud par un processus de configuration. Le processus de configuration est mis en oeuvre par tout ordinateur ayant des droits pour accéder :
- A la base de données de gestion de la grappe,
- A la base de données de gestion de configurations.

Dans notre exemple nous considérons que cet ordinateur est l'ordinateur 100 de management. Dans la pratique il s'agit d'un ordinateur de la grappe.

La sélection s'effectue :
- Par la lecture d'une liste saisie par un utilisateur,
- Par une saisie interactive,
- Par l'exécution d'une requête de sélection de type SQL sur la base de données de gestion de la grappe.

A la fin de la sélection on a au moins un identifiant d'un noeud. Via cet identifiant, par interrogation de la base de données de configuration il est possible d'extraire un identifiant d'un système actif sur le noeud.

On rappel ici que cet identifiant de système actif n'est pas une valeur de configuration mais une information d'exploitation écrite via une sollicitation explicite du noeud : l'émission d'un message.

De l'étape 600 de sélection on passe à une étape 601 d'extraction de données de configuration de la base de données de gestion de configurations. Dans cet étape, pour chaque noeud sélectionné à l'étape précédente, on extrait de la base de données de configuration les enregistrements correspondant, simultanément (au sens ET logique), à l'identifiant de noeud et à l'identifiant de système actif. On obtient ainsi une liste de paires clé/valeur. On note ici que la liste peut être vide.

De fait de la simultanéité de l'application des conditions de sélection, pour un noeud donné, seuls les paramètres correspondant au système actif sur ce noeud sont sélectionnés.

On passe alors à une étape 602 d'émission des paramètres extraits. Dans cette étape, pour chaque liste produite à l'étape précédente, on produit un message 6020 de configuration comportant une zone 6022 pour enregistrer les paires clé/valeur sous forme d'une liste sérialisée. Il est ici évident que l'ensemble de la liste peut être émis par plusieurs message si le protocole utilisé l'impose, en particulier si la taille de la charge utile d'un message est inférieure à la taille de la liste mise en forme en vue de sa transmission. Il est aussi évident que les formats et procédés de « sérialisation/dé sérialisation » sont connus, par exemple JSON ou XML pour ne citer que les plus connus à cette date. En plus de la liste le message de configuration comporte un code 6021 instruction de qualification du message permettant d'indiquer au destinataire quel traitement doit être appliqué au contenu de ce message.

L'adresse de destination du message de configuration est obtenue via une interrogation de la base de données de gestion de grappe, ou par une interrogation d'un serveur DNS non représenté. On précise ici qu'un identifiant de noeud est, par exemple, son nom réseau.

Une fois produit le message 6020 de configuration est émis. On note que le message de configuration en lui-même est classique. L'intérêt de l'invention réside dans son mode de production.

Dans une étape 603 un noeud reçoit le message de configuration produit par le serveur de management et l'interprète pour mettre à jour la configuration du système actuellement actif.

Dans une variante de l'invention, si l'amorçage du noeud est provoqué par un message émis par l'ordinateur de management, alors l'ordinateur de management efface l'information d'identification de système actif de l'enregistrement de la base de données de gestion de grappe correspondant au noeud vers lequel il envoie une sollicitation d'amorçage. Cela permet de maintenir la cohérence de la base de données de gestion de grappe. Seul le noeud est capable de savoir quel est le système actif sur lui et donc de mettre cette information à jour.

## Revendications

1. Procédé de configuration d'au moins un noeud (200) d'une grappe (1000) d'ordinateurs ledit au moins un noeud ayant été déployé en mode amorçage multiple **caractérisé en ce qu'**il comporte les étapes suivantes :
- amorçage (500) du noeud,
- émission (501), par le noeud d'un message (5010) d'identification d'un système d'exploitation actif,
- réception (503) par un ordinateur de management de la grappe du message d'identification d'un système d'exploitation actif,
- mise à jour (504) par l'ordinateur de management dans une base de données de gestion de la grappe d'ordinateurs, d'un identifiant d'un système d'exploitation actif sur le noeud, à partir du contenu du message d'identification d'un système d'exploitation actif.

2. Procédé de configuration selon la revendication précédente, **caractérisé en ce qu'**il comporte les étapes suivantes :
- sélection (600) d'un noeud via un identifiant de noeud, par un processus de configuration de la grappe d'ordinateurs, dans la base de données de gestion de la grappe d'ordinateurs,
- extraction, par le processus de configuration, de paramètres de configuration préalablement enregistrés dans une base de données de gestion de configurations, les paramètres de configuration étant en relation avec le noeud et avec le système d'exploitation actif sur le noeud,
- émission, par le processus de configuration, des paramètres de configuration extraits vers le noeud,
- application, par le noeud, des paramètres de configuration émis.

3. Procédé selon l'une des revendications précédentes, **caractérisé en ce que** le message d'identification comporte au moins :
- un code instruction (5011) de qualification du message,
- un identifiant (5012) de noeud,
- un identifiant (5013) de système d'exploitation actif.

4. Procédé selon l'une des revendications précédentes, **caractérisé en ce que** l'amorçage est provoqué par une sollicitation émise par l'ordinateur de management, celui-ci initialisant en même temps un enregistrement de la base de données de gestion de grappe correspondant au noeud destinataire de la sollicitation.

5. Dispositif de stockage numérique comportant un fichier comprenant des premières instructions de code et des secondes instructions de code, lesdites premières et secondes instructions de code étant adaptées à mettre en oeuvre le procédé selon l'une des revendications précédentes lorsque les premières instructions de code sont exécutées par au moins un noeud d'une grappe et les secondes instructions de code sont exécutées par un ordinateur de management de la grappe.

6. Système de configuration d'au moins un noeud (200) d'une grappe (1000) d'ordinateurs ledit au moins un noeud ayant été déployé en mode amorçage multiple **caractérisé en ce que** ledit système comprend :
- des moyens d'amorçage dudit noeud,
- des moyens d'émission, par ledit noeud d'un message d'identification d'un système d'exploitation actif,
- un ordinateur de management de la grappe, ledit ordinateur de management comprenant :
• des moyens de réception du message d'identification d'un système d'exploitation actif,
• des moyens de mise à jour d'une base de données de gestion de la grappe d'ordinateurs, d'un identifiant d'un système d'exploitation actif sur le noeud, à partir du contenu du message d'identification d'un système d'exploitation actif.

## Patentansprüche

1. Konfigurationsverfahren wenigstens eines Knotens (200) eines Clusters (1000) aus Computern, wobei der genannte wenigstens eine Knoten im multiplen Hochfahrmodus aufgestellt ist, **dadurch gekennzeichnet, dass** es die folgenden Schritte umfasst:
- Hochfahren (500) des Knotens;
- Absenden (501) einer Kennungsnachricht (5010) eines aktiven Betriebssystems durch den Knoten,
- Empfang (503) der Kennungsnachricht eines aktiven Betriebssystems durch einen Managementcomputer des Clusters,
- Aktualisierung (504) einer Kennung eines aktiven Betriebssystems auf dem Knoten ausgehend von dem Inhalt der Kennungsnachricht eines aktiven Betriebssystems durch den Managementcomputer in einer Verwaltungsdatenbank des Clusters aus Computern.

2. Konfigurationsverfahren gemäß dem voranstehenden Anspruch, **dadurch gekennzeichnet, dass** es die folgenden Schritte umfasst:
- Auswahl (600) eines Knotens über eine Knotenkennung durch ein Konfigurationsverfahren des Clusters aus Computern in der Verwaltungsdatenbank des Clusters aus Computern,
- Extraktion von zuvor in der Verwaltungsdatenbank von Konfigurationen gespeicherten Konfigurationsparametern durch den Konfigurationsprozess, wobei die Konfigurationsparameter mit dem Knoten und mit dem aktiven Betriebssystem auf dem Knoten in Verbindung stehen,
- Versenden der extrahierten Konfigurationsparameter durch den Konfigurationsprozess zu dem Knoten,
- Anwendung der versandten Konfigurationsparameter durch den Knoten.

3. Verfahren gemäß einem der voranstehenden Ansprüche, **dadurch gekennzeichnet, dass** die Kennungsnachricht wenigstens umfasst:
- einen Anweisungscode (5011) zur Qualifizierung der Nachricht,
- eine Kennung (5012) des Knotens,
- eine Kennung (5013) des aktiven Betriebssystems.

4. Verfahren gemäß einem der voranstehenden Ansprüche, **dadurch gekennzeichnet, dass** das Hochfahren durch ein vom Managementcomputer ausgesandtes Ansprechen hervorgerufen wird, wobei dieser gleichzeitig ein Anmelden der Verwaltungsdatenbank des Clusters initialisiert, die dem Empfängerknoten des Ansprechens entspricht.

5. Digitale Speichervorrichtung, umfassend eine erste Codeanweisungen und zweite Codeanweisungen umfassende Datei, wobei die genannten ersten und zweiten Codeanweisungen geeignet sind, um das Verfahren gemäß einem der voranstehenden Ansprüche umzusetzen, wenn die ersten Codeanweisungen durch wenigstens einen Knoten eines Clusters ausgeführt sind und die zweiten Codeanweisungen durch einen Managementcomputer des Clusters ausgeführt sind.

6. Konfigurationssystem gemäß wenigstens einem Knoten (200) eines Clusters (1000) aus Computern, wobei der wenigstens eine Knoten im multiplen Hochfahrmodus aufgestellt wurde, **dadurch gekennzeichnet, dass** das genannte System umfasst:
- Hochfahrmittel des genannten Knotens,
- Absendemittel einer Kennungsnachricht eines aktiven Betriebssystems durch den genannten Knoten,
- einen Managementcomputer des Clusters, wobei der genannte Managementcomputer umfasst:
∘ Empfangsmittel der Kennungsnachricht eines aktiven Betriebssystems,
∘ Aktualisierungsmittel einer Verwaltungsdatenbank des Clusters aus Computern, einer Kennung eines aktiven Betriebssystems auf dem Knoten ausgehend von dem Inhalt der Kennungsnachricht eines aktiven Betriebssystems.

## Claims

1. Method for configuring at least one node (200) of a cluster (1000) of computers said at least one node having been deployed in multiboot mode **characterised in that** it comprises the following steps:
- booting (500) the node,
- issuing (501), via the node of an identification message (5010) of an active operating system,
- receiving (503) by a cluster management computer of the identification message of an active operating system,
- updating (504) by the management computer in the computer cluster management database, of an identifier of an active operating system on the node, using the content of the identification message of an active operating system.

2. Method for configuring according to the preceding claim, **characterised in that** it comprises the following steps:
- selecting (600) a node via a node identifier, via a computer cluster configuration process, in the computer cluster management database,
- extracting, by the configuration process, of configuration parameters recorded beforehand in a configuration management database, the configuration parameters being in relation with the node and with the active operating system on the node,
- issuing, by the configuration process, of extracted configuration parameters to the node,
- applying, by the node, of the issued configuration parameters.

3. Method according to one of the preceding claims, **characterised in that** the identification message comprises at least:
- one instruction code (5011) of the qualification of the message,
- one node identifier (5012),
- an active operating system identifier (5013).

4. Method according to one of the preceding claims, **characterised in that** the boot is caused by a solicitation issued by the management computer, the latter initialising at the same time a record of the cluster management database corresponding to the addressee node of the solicitation.

5. Digital storage device comprising first instruction codes and second instruction codes, said first and second instruction codes being suitable for implementing the method according to one of the preceding claims when the first instruction codes are executed by at least one node of a cluster and the second instruction codes are executed by a cluster management computer.

6. System for configuring at least one node (200) of a cluster (1000) of computers said at least one node having been deployed in multiboot mode **characterised in that** said system comprises:
- means for booting said node,
- means for issuing, by said node of an identification message of an active operating system,
- a cluster management computer, said management computer comprising:
∘ means for receiving the identification message of an active operating system,
∘ means for updating a computer cluster management database, of an identifier of an active operating system on the node, using the content of the identification message of an active operating system.
